# EUROPÄISCHE PATENTSCHRIFT

(11) **EP 0 629 310 B1**
(45) Veröffentlichungstag und Bekanntmachung des Hinweises auf die Patenterteilung: **21.08.1996**
(21) Anmeldenummer: 93905151.2
(22) Anmeldetag: 02.03.1993
(51) Int. Cl.: G21C 9/004, F16K 17/38

(54) **SICHERHEITSEINRICHTUNG GEGEN ÜBERDRUCKVERSAGEN EINES KERNREAKTOR-DRUCKBEHÄLTERS**
SAFETY DEVICE AGAINST THE FAILURE OF A NUCLEAR REACTOR PRESSURE VESSEL DUE TO OVERPRESSURE
DISPOSITIF DE PREVENTION DE DEFAILLANCE DUE A LA SURPRESSION DE LA CUVE SOUS PRESSION D'UN REACTEUR NUCLEAIRE

(30) Priorität: 03.03.1992 DE 4206660
(43) Veröffentlichungstag der Anmeldung: 21.12.1994
(73) Patentinhaber: SIEMENS AKTIENGESELLSCHAFT, 80333 München (DE)
(72) Erfinder: SEIDELBERGER, Hartmut, D-8520 Erlangen (DE); STOCKHAUSEN, Horst-Dieter, D-8500 Nürnberg 60 (DE); HAU, Gerhard, D-8510 Fürth (DE); HOLLMANN, Josef, D-8602 Schlüsselfeld (DE)
(86) Internationale Anmeldenummer: DE9300183
(87) Internationale Veröffentlichungsnummer: WO9318523

(56) Entgegenhaltungen:
- EP-A- 0 247 518
- DE-A- 3 339 627
- DE-A- 3 526 377
- US-A- 2 389 437
- US-A- 2 637 333

## Beschreibung

### Sicherheitseinrichtung gegen Überdruckversagen eines Kernreaktor-Druckbehälters

Die Erfindung bezieht sich auf eine Sicherheitseinrichtung gegen Überdruckversagen eines Kernreaktor-Druckbehälters bei ungenügender Kernkühlung, wie im Gattungsbegriff des Anspruchs 1 angegeben.

Durch die DE 36 17 524 C2 ist eine Vorrichtung zur temperaturabhängigen Druckentlastung von Druckbehältern bekannt, bei welcher ein in einer Abblasleitung des Druckbehälters vorgesehenes Absperrorgan bei einer vorgegebenen Temperatur geöffnet wird. Durch diese temperaturabhängige Druckentlastung wird erreicht, daß bei einem äußerst unwahrscheinlichen Versagen sämtlicher Kühleinrichtungen eines Kernkraftwerks der Druck im Primärkreis vor einer eventuellen Schädigung der Wandung des Reaktordruckbehälters durch Übertemperatur auf ein niedriges Niveau abgesenkt wird. Bei der bekannten Vorrichtung nach der genannten DE-PS ist der Temperaturfühler außerhalb des Reaktordruckbehälters angeordnet. Die bekannte Vorrichtung arbeitet deshalb mit einer verhältnismäßig großen Zeitkonstante, gerechnet vom Beginn der unzulässigen Übertemperatur bis zum Ansprechen der Druckentlastung.

Die DE 35 26 377 A1 beschreibt einen Hochtemperaturreaktor mit einem Reaktordruckbehälter und einem als Federventil ausgebildeten Sicherheitsventil für die Druckbegrenzung in dem Reaktordruckbehälter bei Kernaufheizstörfällen. Der Reaktordruckbehälter ist innenseitig mit einem Liner ausgekleidet, der an ein Liner-Kühlsystem angeschlossen ist. Die Ventilfeder des Sicherheitsventiles besteht aus einem Material mit bei ansteigender Temperatur abnehmender Federkraft. Die Ventilfeder wird bei offenem Sicherheitsventil mit ausströmendem Gas beaufschlagt und ist zur Kühlung an das Liner-Kühlsystem angeschlossen.

Der Erfindung liegt die Aufgabe zugrunde, eine gattungsgemäße Sicherheitseinrichtung so auszubilden, daß die Druckentlastung bei einem Kernreaktor-Druckbehälter bei Auftreten einer Übertemperatur in seinem Inneren, bedingt durch das (an sich höchst unwahrscheinliche) Ausfallen der Kernkühlung mit kleinerer Zeitkonstante erfolgt.

Erfindungsgemäß wird die gestellte Aufgabe bei einer Sicherheitseinrichtung gemäß Gattungsbegriff des Anspruchs 1 dadurch gelöst, daß das Widerlager seinerseits von einem Kraftübertragungsglied gehalten ist und daß dieses Kraftübertragungsglied an seinem dem Widerlager abgewandten Ende mittels einer grenztemperaturabhängig lösbaren, im Druckbehälter angeordneten Arretierung fixiert ist. Die Arretierung ist bei einer Grenztemperatur von z.B. 700 °C zwecks Freigabe des Widerlagers und damit zum differenzdruck-bedingten Abheben des Verschlußstückes von seinem Sitz lösbar.

Vorteilhafte Weiterbildungen sind in den Ansprüchen 2 - 14 angegeben.

Eine vorteilhafte Ausführungsform der Erfindung besteht darin, daß sich das Kraftübertragungsglied von seinem Kraftangriffspunkt am Widerlager ins Innere des Druckbehälters bis zu einem Einbauteil erstreckt, wo es mittels der temperaturabhängigen Arretierung fixiert ist. Für das Kraftübertragungsglied können Druck- oder Zugkraft übertragende Elemente verwendet sein. Die grenztemperaturabhängig lösbare Arretierung kann durch eine Schmelzlotarretierung oder durch ein sogenanntes 1-Glied (z.B. ein Metallstab mit vergrößertem linearem Temperaturkoeffizienten) verwirklicht sein. Bevorzugt besteht eine Weiterbildung der Erfindung darin, daß das Kraftübertragungsglied als Zugelement ausgeführt ist, welches an seinem Ende über das Widerlager der Ventilschließfeder mit dem Verschlußstück gekuppelt und an seinem anderen Ende mittels der temperaturabhängigen Arretierung fixiert ist, welche bei Erreichen der Grenztemperatur eine axiale Auslenkung des Zugelementes zuläßt.

Eine weitere vorteilhafte Ausführungsform der Erfindung besteht darin, daß das Zugelement mittels einer Schmelzlotarretierung fixiert ist, welche bei Erreichen der Grenztemperatur aufschmilzt. Für eine solche Schmelzlot-arretierung haben sich Silberlotlegierungen als vorteilhaft erwiesen, welche bis zu ihrem Schmelzpunkt von beispielsweise ca. 700°C stabil und auch strahlenresistent sind.

Gemäß einer anderen vorteilhaften Ausführungsform ist das Zugelement an seinem anderen (in den Druckbehälter ragenden) Ende mit einem im Wärmekontakt mit Einbauten des Druckbehälters stehenden, an diesen befestigten Metallstab zugfest verbunden und mittels dieses Metallstabes arretiert, wobei der lineare Ausdehnungskoeffizient des Metallstabes größer, vorzugsweise wesentlich größer, ist als der des Zugelementes, und wobei der Metallstab und mit ihm das Zugelement bei Erreichen der Grenztemperatur eine solche Längenzunahme erfahren, daß das Verschlußstück öffnet. Bevorzugt ist das Zugelement als Zugstange ausgebildet, welche an ihrem freien Ende (im Inneren des Druckbehälters) mit der temperaturabhängigen Arretierung verbunden ist. Für die Montage, Demontage und Remontage ist es besonders günstig, wenn das Kraftübertragungsglied innerhalb des Druckbehälters mit einer lösbaren Kupplung versehen ist, welche das Entkuppeln und Herausziehen zumindest eines Teilstücks des Kraftübertragungsgliedes vor der Demontage des Druckbehälterdeckels gestattet. Demgemäß ist eine vorteilhafte Variante der Erfindung, daß das Kraftübertragungsglied mit seiner temperaturabhängigen Arretierung an einer oberen Gitterplatte des Druckbehälters fixierbar ist und mittels einer lösbaren Kupplung oder Verriegelung, z.B. einer Bajonettverriegelung, zumindest mit einem äußeren bzw. oberen Teil bei geöffnetem Druckentlastungsventil von oben lösbar und demontierbar ist. Im Zusammenhang damit steht eine bevorzugte Ausführungsform, bei welcher das Druckentlastungsventil an einem Deckelstutzen des Druckbehälters angeflanscht ist. Wenn im Falle eines Brennelementwechsels der Druckbehälter zunächst drucklos gemacht und dann geöffnet werden soll, dann werden zunächst die Deckelisolierung abgehoben und die Steuerstäbe sowie die Meßlanzen herausgezogen, und bei diesen vorbereitenden Maßnahmen wird auch das Druckentlastungsventil von seinem Deckelstutzen abgeflanscht und das Zugelement (nach Lösen seiner Bajonettverriegelung) herausgezogen. Es können dann das Lösen der Deckelschrauben mit der Schraubenspannvorrichtung und dann das Abheben des Deckels erfolgen.

Das Verschlußstück des Druckentlastungsventils ist zweckmäßigerweise ein sich zur Anströmrichtung hin verjüngender Ventilkegel, welcher von dem Kraftübertragungsglied gegen entsprechend konisch geformte Sitzflächen und gegen die aus dem Differenzdruck resultierende Kraft dichtend gehalten ist. Diese Bauform ist strömungstechnisch besonders günstig. Weiterhin ist es vorteilhaft, wenn ein Ventilschaft des Verschlußstücks in einer Stopfbuchse abgedichtet und gleitend geführt ist, wenn sich auf der dem Druckbehälter zugewandten Seite der Stopfbuchse eine mit der Druckentlastungsleitung kommunizierende und den Ventilsitz begrenzende Überströmkammer befindet und wenn auf der anderen Seite der Stopfbuchse die Ventilfeder in einer Ventilkammer aufgenommen ist. Diese Ventilkammer ist druckdicht nach außen abgeschlossen; sie befindet sich an dem von der temperaturabhängigen Arretierung am weitesten entfernten Stelle des Kraftübertragungselementes, so daß diese Ventilkammer und die in ihr befindliche Ventilschließfeder sich auf einem relativ niedrigem Temperaturniveau befinden, zumal das Gehäuse des Druckentlastungsventils außen vom Kühlluftstrom des Reaktordruckbehälters umströmt wird.

Eine Weiterbildung der vorstehend erwähnten Ventilkonstruktion besteht darin, daß der Ventilschaft von dem Kraftübertragungsglied zentrisch-gleitend durchdrungen ist und in die Ventilkammer ragt, daß sich der Ventilschaft auf der dem Verschlußstück abgewandten Seite der Stopfbuchse zu einer die Ventilkammer begrenzenden druckfesten Kapsel erweitert oder mit einer solchen Kapsel verbunden ist und daß in der Kapsel sich die Ventilschließfeder befindet und mit einem Ende auf dem Kapselboden abstützt sowie am anderen Ende gegen das vom freien Ende des Kraftübertragungsgliedes gebildete oder getragene Widerlager abstützt. Da es sich bei dem Ventilschaft um ein längsverschieblich bewegbares Bauteil handelt, so bildet er mit der von ihm durchdrungenen Stopfbuchse eine Bewegungsdichtung. Es ist deshalb eine bevorzugte Ausführungsform, die druckfeste Kapsel noch mit einem Gehäusedeckel nach außen druckfest einzuschließen. Auf diese Weise können eventuell auftretende kleine Leckströme, die längs der Bewegungsdichtung durch die Stopfbuchse ihren Weg hindurch nehmen würden, auf keinen Fall nach außen gelangen. Für solche Leckströme wäre allerdings Bedingung, daß das Verschlußstück selbst nicht 100 % abdichtet.

Im Rahmen der Erfindung liegt es auch, daß bei entsprechend geringeren Querschnitts-Abmessungen des Druckentlastungsventils und des Deckelstutzens die Druckentlastungsleitung als Steuerleitung für ein gesondertes Abblaseventil ausgebildet ist. In diesem Falle genügen relativ kleine Deckelstutzen- Durchmesser, wie sie z.B. für Meßlanzen-Durchführungen üblich sind.

Im folgenden wird der Erfindungsgegenstand anhand zweier, in der Zeichnung dargestellter Ausführungsbeispiele noch näher erläutert. In der Zeichnung zeigt:
Figur 1 eine Sicherheitseinrichtung nach der Erfindung im Querschnitt mit einem Druckentlastungsventil, einem Zugelement und einer das Zugelement an einer Gitterplatte des Reaktordruckbehälters fixierenden Schmelzlotarretierung,
Figur 2 eine Variante zum Ausführungsbeispiel nach Figur 1 mit einem an der Gitterplatte wärmeelastisch verschraubten Metallstab, der mit dem Zugelement verbunden ist und einen größeren linearen Wärmeausdehnungskoeffizient als dieses aufweist, und
Figur 3 eine Variante zum Ausführungsbeispiel nach Figur 1, bei welcher das Zugelement innerhalb des Druckbehälters und oberhalb eines Führungsgerüstes mittels einer Gewindekupplung auftrennbar ist.

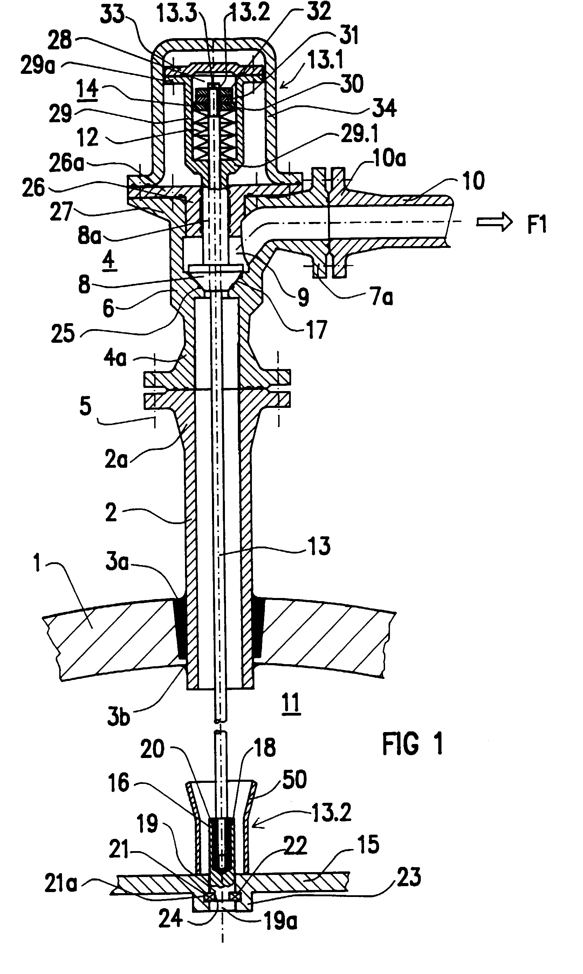

Gemäß Figur 1 ist in den auschnittsweise dargestellten Deckel 1 eines Kernreaktordruckbehälters 11 (im folgenden: Druckbehälter) ein Deckelstutzen 2 druckdicht eingeschweißt, eine äußere und eine innere umlaufende Schweißnaht sind mit 3a und 3b bezeichnet. Der Deckelstutzen 2 weist an seinem äußeren Ende ein angeschweißtes Flanschstück 2a auf, mit welchem das Gegenflanschstück 4a eines Druckentlastungsventils 4 druckdicht verschraubt ist, siehe die bei 5 angedeuteten Flanschschrauben. Das Druckentlastungsventil 4 hat einen Einlaßstutzen 6, zu welchem das Flanschstück 4a gehört, einen einen Flanschring 7a aufweisenden Auslaßstutzen 7 und eine Einlaß- und Auslaßstutzen 6, 7 bei geöffnetem Verschlußstück 8 verbindende Überströmkammer 9, welche in der dargestellten Schließposition des als Ventil-Dichtkegel ausgebildeten Verschlußstückes 8 nur mit dem Auslaßstutzen 7 strömungsmäßig in Verbindung steht. An den Ringflansch 7a ist die im Ausschnitt dargestellte, einen entsprechenden Ringgegenflansch 10a aufweisende Abblaseleitung 10 druckdicht angeschraubt. Der Pfeil F1 symbolisiert die Richtung des Dampfstroms aus dem Inneren des als Ganzes mit 11 bezeichneten Druckbehälters, wenn das Verschlußstück 8 bei Erreichen einer Grenztemperatur im Inneren des Druckbehälters 11 geöffnet hat. Die dargestellte Sicherheitseinrichtung verhindert demgemäß ein Überdruckversagen des Druckbehälters 11 bei ungenügender Kernkühlung. Hierzu ist in eine Wand 1 (im dargestellten Beispiel die Deckelkalotte) des Druckbehälters 11 das Druckentlastungsventil 4 druckdicht eingesetzt. Es sperrt mit einem durch eine widerlager-abgestützte Ventilschließfeder 12 im Schließsinne beaufschlagtes Verschlußstück 8 den Durchfluß vom Innenraum des Druckbehälters 11 zur Druckentlastungs- oder Abblaseleitung 10 normalerweise ab. Ein Kraftübertragungsglied in Gestalt eines langgestreckten Zugelementes 13, vorzugsweise eine Zugstange, ist an seinem einen Ende 13.1 über das Widerlager 14 der Ventilfeder 12 mit dem Verschlußstück 8 bzw. mit dessen Ventilschaft 8a gekuppelt und ragt mit seinem anderen Ende 13.2 in das Innere des Druckbehälters 11. Hier ist es an Einbauten 15 des Druckbehälters 11 mittels einer temperaturabhängigen Arretierung 16 fixiert, welche bei Erreichen einer Grenztemperatur von z.B. 700 C eine axiale Auslenkung des Zugelementes 13 zuläßt, so daß unter Entspannung der Ventilfeder 12 das Verschlußstück 8 zum differenzdruck-bedingten Abheben von seinem Ventilsitz 17 freigibt. Beim Einbauteil 15 handelt es sich um die obere Kerngitterplatte eines Kernreaktor-Druckbehälters des Druckwassertyps; eine Überhitzung des Kerns würde sich dieser Kerngitterplatte 15 unmittelbar mitteilen, so daß diese Kerngitterplatte 15 zum Anbringen der temperaturabhängigen Arretierung 16 besonders gut geeignet ist. Bei der Arretierung 16 nach Figur 1 handelt es sich um eine Schmelzlot-Arretierung. Dabei ist in die Höhlung 18 eines Verriegelungskopfes 19 das untere Ende 13.2 des Zugelementes 13 mittels Silberlot 20 eingelötet.

Der Verriegelungskopf 19 hintergreift mit einem Hammerkopf 19a ein z.B. ringförmiges Paßstück 21 in Nuten 21a. Das Paßstück 21 ist in eine Ringnut 22 am Innenumfang der nach unten vorspringenden Paßstückhalterung 23 (diese verbunden oder integral mit der Gitterplatte 15) eingesetzt. Wenn der Hammerkopf 19a aus dieser Bajonettverriegelung herausgenommen werden soll, dann wird die Ventilschließfeder 12 um ein geringes Stück weiter zusammengedrückt, bis der Hammerkopf 19a außer Eingriff der Nuten 21a kommt und um 90° gedreht werden kann. Wird dann die Ventilschließfeder 12 langsam entspannt, dann kann der Hammerkopf 19a durch die Rechteckaussparung 24 (welche ein den Hammerkopf durchlassendes Profil aufweist) hindurchgesteckt bzw. hindurchgefädelt werden. Sinngemäß umgekehrt zum Entriegelungsvorgang läuft der Verriegelungsvorgang des Hammerkopfes 19a ab. Dabei dient ein koaxial zur Achse des Zugelementes 13 bzw. der Rechteckaussparung 24 angeordneter Einführstutzen 50 mit konischer Erweiterung 50.1 als Einführhilfe für den Verriegelungskopf 19. Der Stutzen ist an der Oberseite der Gitterplatte 15 z.B. durch Schweißen befestigt.

Die Höhlung 18 im Verriegelungskopf 19 ist so tief bzw. überlappt das Zugelement 13 auf einer solchen Länge, daß die Silberlotverbindung zwischen dem Ende 13.2 des Zugelements 13 und dem Verriegelungskopf 19 im Normalbetrieb des Kernreaktors unter allen Umständen der durch das Zugelement 13 übertragenen Scherkraftbeanspruchung widersteht. Wird durch eine Überhitzung des nicht näher dargestellten Reaktorkerns, welcher sich auch dessen Einbauten, also auch der oberen Kerngitterplatte 15, mitteilt, die Grenztemperatur von z.B. ca. 700 C im Bereich der Schmelzlotarretierung 20 erreicht, so schmilzt diese auf und kann nicht mehr den auf sie wirkenden Scherkräften widerstehen. Infolgedessen wird das Zugelement 13 freigegeben, die Ventilschließfeder 12 entspannt sich so weit, daß das Verschlußstück 8 aufgrund der an ihm angreifenden Differenzdruckkräfte von seinem Ventilsitz 17 abgehoben wird. Es stellt sich eine vom Druck im Reaktorinneren angetriebene Abblaseströmung durch das Druckentlastungsventil 4 ein, vgl. Strömungspfeil F1, über die Abblaseleitung 10 hin zu einem nicht dargestellten Abblasebehälter. An der Ventilschließfeder 12 greift im ausgelösten Zustand nur die Gewichtskraft des Zugelementes 13 an, so daß eine Druckentlastung bis zu einem Druckniveau kleiner als 30 bar erfolgen kann, insbesondere praktisch bis zum drucklosen Zustand.

Für den geschilderten Abblasevorgang ist die dargestellte Form des Verschlußstückes 8 besonders günstig. Dieses ist ein sich zur Anströmrichtung hin verjüngender Ventilkegel, welcher von dem Zugelement 13 gegen entsprechend konisch geformte Sitzflächen 17 und gegen die aus dem Differenzdruck resultierende Kraft dichtend gehalten ist. In die Ventilsitzflächen 17 können zur Verbesserung der Dichtwirkung noch Dichtringe 25, vorzugsweise aus einer korrosionsfesten Stahllegierung, eingelassen sein.

Gemäß der dargestellten bevorzugten Ausführungsform ist ein Ventilschaft 8a des Verschlußstückes 8 in einer Stopfbuchse 26 abgedichtet und gleitend geführt. Diese bildet einen ersten Deckel des an den Einlaßstutzen 6 angrenzenden Ventilgehäuses 27 und ist mit einem Ringflansch 26a mit einer stirnseitigen Paßfläche dieses Ventilgehäuses 27 dichtend verspannt. Auf der dem Druckbehälter 11 zugewandten Seite der Stopfbuchse 26 befindet sich die schon erwähnte, mit der als Abblaseleitung 10 ausgebildeten Druckentlastungsleitung kommunizierende und den Ventilsitz 17 bildende Überströmkammer 9. Auf der anderen Seite der Stopfbuchse 26 ist die Ventilschließfeder 12, bevorzugt ausgebildet als Schraubendruckfeder oder Tellerfederpaket (dargestellt) in einer Ventilkammer 28 aufgenommen. Damit nun temperaturabhängige Längenänderungen des Zugelementes 13 (oder allgemein: Kraftübertragungsgliedes) nicht zu Zwangskräften aufgrund verhinderter Wärmedehnung führen können, ist der Ventilschaft 8a von dem Zugelement 13 zentrischgleitend durchdrungen und ragt in die Ventilkammer 28. Der Ventilschaft 8a ist, wie dargestellt, auf der dem Verschlußstück 7 abgewandten Seite der Stopfbuchse 26 zu einer die Ventilkammer 28 begrenzenden druckfesten Kapsel 29 erweitert (oder mit einer solchen Kapsel 29 verbunden). In der Kapsel 29 befindet sich die Ventilschließfeder 12, welche sich mit einem Ende auf dem Kapselboden 29.1 abstützt sowie sich am anderen Ende gegen das vom freien Ende des Zuglelementes 13 gebildete oder getragene Widerlager 14 abstützt. Im einzelnen ist hierzu auf das freie Ende 13.1 des Zugelementes 13 eine Ringscheibe 30 aufgeschoben, und dazu benachbart sind eine Mutter und eine Kontermutter 31, 32 auf den Gewindeschaft 13.2 des Zugelementes 13 aufgeschraubt. Der Vierkant 13.3 am oberen Ende des Zugelementes 13 dient zum Angriff eines Drehwerkzeuges (als Verdrehsicherung, wenn die Flachkant-Muttern 30, 31 festgezogen werden oder um den Hammerkopf 19a am unteren Ende des Zugelementes 13 in bzw. außer Eingriff der Bajonettverriegelung zu bringen).

Die druckfeste Kapsel 29 ist mit einem Flanschdeckel 33 (zweiter Ventildeckel) druckdicht nach außen abgeschlossen, der mit einem Ringflansch 29a der Kapsel 29 verspannt ist. Das Druckentlastungsventil 4 wird nach außen durch einen weiteren Ventildeckel 34 druckdicht abgeschlossen (dritter Ventildeckel), welcher vor allem dazu dient, die Bewegungsdichtung zwischen dem Ventilschaft 8a und der Stopfbuchse 26 nach außen druckfest abzuschotten, welcher jedoch auch eine weitere Dichtungsbarriere für die Flanschverbindungen des ersten Ventildeckels (Stopfbuchse 26) und des zweiten Ventildeckels 33 ist. Durch diese Anordnung wird erreicht, daß das Druckentlastungsventil mit seinen Flanschverbindungen mindestens eine gleich gute Dichtigkeit aufweist wie der Deckelflansch des zugehörigen (nicht näher dargestellten) Reaktordruckbehälters.

Das in Figur 1 dargestellte Druckentlastungsventil kann bei entsprechend geringeren Querschnitts-Abmessungen und bei entsprechend kleinerer Nennweite des Deckelstutzens 2 und der Abblaseleitung 10 als ein Steuerventil für ein gesondertes Abblaseventil dienen. Die Abblaseleitung 10 (allgemein: Druckentlastungsleitung) wird dann zur Steuerdruckleitung, und das angesteuerte (nicht dargestellte) Abblaseventil ist einem (ebenfalls nicht dargestelten) Abblasebehälter zugeordnet. Der Vorteil einer solchen Anordnung liegt im Vergleich zu den bisher schon im Zusammenhang mit Druckhaltern bekannten Druckentlastungsventilen darin, daß das Drucksteuerventil auf Grenztemperaturen im Inneren des Reaktors sehr schnell reagiert.

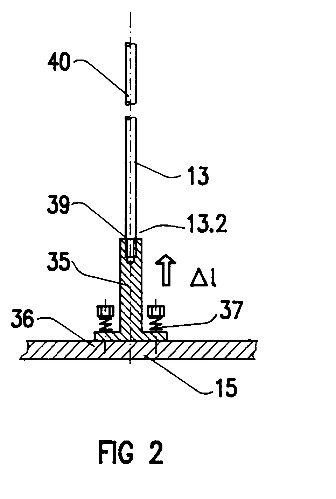

Das zweite Ausführungsbeispiel nach Figur 2 unterscheidet sich vom ersten im wesentlichen dadurch, daß das Zugelement 13 an seinem anderen (bzw. unteren) Ende 13.2 mit einem Metallstab 35 zugfest verbunden, z.B. verschraubt (dargestellt) oder verschweißt ist und mittels dieses Metallstabes 35 an Einbauten des Druckbehälters 11 arretiert ist. Damit das demontierbare obere Stangenende nicht zu lang ist, kann die Gewindekupplung 39 auch weiter nach oben, z.B. zu einer Trennstelle 40 verlegt werden. Dann wäre die dargestellte Gewindekupplung 39 durch eine feste Verbindung zu ersetzen. Der lineare Ausdehnungskoeffizient dieses Metallstabes 35 ist größer, vorzugsweise wesentlich größer, gewählt, als derjenige des Zugelementes 13, so daß der Metallstab 35 und mit ihm das Zugelement 13 bei Erreichen der Grenztemperatur eine solche Längenzunahme 1 erfahren, daß das Verschlußstück 7 (Figur 1) öffnet. Das untere Ende des Metallstabes 35 kann anstelle einer Gewindekupplung 39 so wie beim ersten Ausführungsbeispiel nach Figur 1 mittels einer Bajonettverriegelung an dem Einbauteil 15 (obere Kerngitterplatte) fixiert sein. Es ist - wie dargestellt - z.B. auch möglich, den Metallstab 35 an seinem unteren Ende mit einem ringförmigen Fuß 36 zu versehen und diesen Fuß 36 an dem Einbauteil 15 mittels schwingungsgesicherter Schrauben 37 wärmeelastisch zu befestigen. Die wärmeelastische Befestigung kann z.B. durch Federscheiben 38 zwischen dem Kopf der Schrauben 37 und dem Fuß 36 verwirklicht sein. Vom Standpunkt einer leichten Montage, Demontage und Remontage ist eine bajonettartige Verriegelung zur Fixierung des Metallstabes 35 vorteilhafter, wenngleich nicht zwingend erforderlich.

Beim Zugelement 13 kann es sich allgemein um ein Kraftübertragungsglied handeln, das entweder auf Zug oder auf Druck belastbar ist oder beide Belastungsarten aushält. Zur Erzeugung der Schließkraft ist im Ausführungsbeispiel eine Druckfeder 12 (insbesondere ein Tellerfederpaket) vorgesehen; die Schließkraft könnte sinngemäß auch durch eine auf Zug beanspruchte Ventilschließfeder aufgebracht werden. Wesentlich für die Erfindung ist, daß das Verschlußstück 7 in seiner dargestellten Schließstellung mittels einer grenztemperaturabhängig lösbaren Arretierung gehalten ist, durch welche bei Erreichen der Grenztemperatur die auf das Verschlußstück 7 wirkenden Ventilschließkräfte so weit vermindert werden, daß das Verschlußstück 7 aufgrund der an ihm angreifenden Differenzdruckkräfte in seine Öffnungsstellung verlagert werden kann. Dabei kann der die Lösung der Arretierung herbeiführende Wärmefluß z.B. auch durch wärmeleitende Bauteile vom Druckbehälterdeckel auf die temperatursensitive Arretierung übertragen werden, weil auch der Deckel, insbesondere an seinem Innenumfang, bei einer Überhitzung des Reaktors, vor allem aufgrund von Wärmestrahlung, ein gutes Abbild der Überhitzung ergibt. Ordnet man (wie in Figuren 1 und 2 dargestellt) die temperatursensitive Arretierung Druckbehältereinbauten zu, die näher zum Reaktorkern angeordnet sind als der Deckel, so kann damit eine etwas schnellere Auslösung bzw. Öffnung des Druckentlastungsventils erreicht werden.

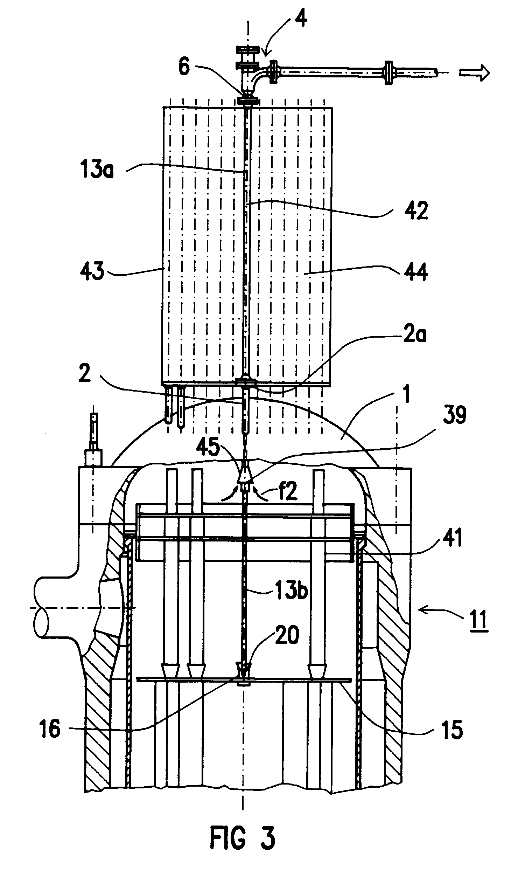

Figur 3 zeigt die Gesamtansicht einer Sicherheitseinrichtung nach der Erfindung, bei der anstelle einer Bajonettverriegelung im Bereich der Gitterplatte 15 (vgl. Figur 1) eine Gewindekupplung 39 oberhalb eines Kerngerüstes 41, jedoch unterhalb des Druckbehälter-Deckels 1, d.h. innerhalb des vom gewölbten Deckel 1 umgebenen Innenraumes des Druckbehälters 11, vorgesehen ist. Der Einlaßstutzen 6 des Druckentlastungsventils 4 ist über ein langes Rohrzwischenstück 42 an den Deckelstutzen 2 angeflanscht. Das Rohrzwischenstück 42 weist eine etwas größere axiale Länge auf als das Steuerstab-Haltegerüst 43 bzw. durchdringt dieses achsparallel zu den Achsen 44 der nicht näher dargestellten Steuerstäbe. Der Deckelstutzen 2 läuft nach unten in eine konisch erweiterte Einlaßhülse 45 für das Primärmedium aus. Diese ist im Bereich der Gewindekupplung 39 angeordnet. Die Strömungspfeile f2 deuten die Strömung an, wenn aufgrund einer Übertemperatur die temperaturabhängige Arretierung 16 sich gelöst und das Druckentlastungsventil 4 geöffnet hat. Das Beispiel nach Figur 3 zeigt, daß die untere Hälfte 13b des Zugelementes 13 Bestandteil des Kerngerüstes 41 ist und mit diesem herausgehoben werden kann. Der obere Teil 13a des Zugelementes 13 kann nach Lösen der Gewindekupplung 39 (bei drucklosem Druckbehälter 11 und geöffnetem Druckentlastungsventil 4 sowie nach Lösen der betroffenen Flanschverbindungen) separat oder mit dem Steuerstab-Haltegerüst 43 vor Öffnen des Deckels 1 entfernt werden.

## Patentansprüche

1. Sicherheitseinrichtung gegen Überdruckversagen eines Kernreaktor-Druckbehälters bei ungenügender Kernkühlung, wobei in eine Wand (1) des Druckbehälters (11) bzw. in eine diese Wand (1) durchdringende Leitung (2) ein Druckentlastungsventil (4) druckdicht eingesetzt ist, welches mit einem Verschlußstück (8) den Durchfluß vom Innenraum des Druckbehälters (11) zu einer Druckentlastungsleitung (10) normalerweise absperrt und dabei von einer sich an einem Widerlager (14) abstützenden Ventilschließfeder (12) gehalten ist,
**dadurch gekennzeichnet,**
daß das Widerlager (14) seinerseits von einem Kraftübertragungsglied (13) gehalten ist und daß dieses Kraftübertragungsglied (13) an seinem dem Widerlager (14) abgewandten Ende mittels einer grenztemperaturabhängig lösbaren, im Druckbehälter (11) angeordneten Arretierung (16; 35) fixiert ist, welche bei einer Grenztemperatur von z.B. 700° C zwecks Freigabe des Widerlagers (14) und damit zum differenzdruck-bedingten Abheben des Verschlußstückes (8) von seinem Sitz lösbar ist.

2. Sicherheitseinrichtung nach Anspruch 1,
**dadurch gekennzeichnet**, daß sich das Kraftübertragungsglied (13) von seinem Kraftangriffspunkt am Widerlager (14) ins Innere des Druckbehälters (11) bis zu einem Einbauteil (15) erstreckt, wo es mittels der temperaturabhängigen Arretierung (16; 35) fixiert ist.

3. Sicherheitseinrichtung nach Anspruch 1 oder 2,
**dadurch gekennzeichnet,** daß das Kraftübertragungsglied (13) als Zugelement ausgeführt ist, welches an seinem einen Ende (13.1) über das Widerlager (14) der Ventilschließfeder (12) mit dem Verschlußstück (8) gekuppelt und an seinem anderen Ende (13.2) mittels der temperaturabhängigen Arretierung (16; 35) fixiert ist, welche bei Erreichen der Grenztemperatur eine axiale Auslenkung des Zugelementes (13) zuläßt.

4. Sicherheitseinrichtung nach einem der Ansprüche 1 bis 3,
**dadurch gekennzeichnet**, daß das Kraftübertragungsglied (13) mit einer Schmelzlotarretierung (16) fixiert ist, welche bei Erreichen der Grenztemperatur aufschmilzt

5. Sicherheitseinrichtung nach Anspruch 3,
**dadurch gekennzeichnet**, daß das Zugelement (13) an seinem anderen Ende mit einem in Wärmekontakt mit Einbauten des Druckbehälters stehenden, an diesen befestigten Metallstab (35) zugfest verbunden und mittels dieses Metallstabes arretiert ist, wobei der lineare Ausdehnungskoeffizient des Metallstabes (35) größer, vorzugsweise wesentlich größer, ist als der des Zugelements (13) und der Metallstab und mit ihm das Zugelement (13) bei Erreichen der Grenztemperatur eine solche Längenzunahme erfahren, daß das Verschlußstück (8) öffnet.

6. Sicherheitseinrichtung nach einem der Ansprüche 1 bis 5, **dadurch gekennzeichnet**, daß das Druckentlastungsventil (4) an einem Deckelstutzen (2) des Druckbehälters (11) angeflanscht ist.

7. Sicherheitseinrichtung nach einem der Ansprüche 3 bis 6, **dadurch gekennzeichnet**, daß das Zugelement (13) als Zugstange ausgebildet ist.

8. Sicherheitseinrichtung nach einem der Ansprüche 1 bis 7, **dadurch gekennzeichnet**, daß das Kraftübertragungsglied (13) innerhalb des Druckbehälters (11) mit einer lösbaren Kupplung (19, 21; 39) versehen ist, welche das Entkuppeln und Herausziehen zumindest eines Teilstücks des Kraftübertragungsgliedes (13) vor der Demontage des Druckbehälterdeckels (1) gestattet.

9. Sicherheitseinrichtung nach Anspruch 8,
**dadurch gekennzeichnet**, daß das Kraftübertragungsglied (13) mit seiner temperaturabhängigen Arretierung eine obere Gitterplatte (15) des Druckbehälters (11) fixierbar ist umd mittels einer lösbaren Kupplung oder Verriegelung, z.B. einer Bajonettverriegelung (19a, 22, 23) zumindest mit einem äußeren bzw. oberen Teil bei geöffnetem Druckentlastungsventil (4) von oben lösbar und demontierbar ist.

10. Sicherheitseinrichtung nach einem der Ansprüche 1 bis 9, **dadurch gekennzeichnet,** daß das Verschlußstück (8) des Druckentlastungsventils (4) ein sich zur Anströmrichtung hin verjüngender Ventilkegel ist, welcher von dem Kraftübertragungsglied (13) gegen entsprechend konisch geformte Sitzflächen (17) und gegen die aus dem Differenzdruck resultierende Kraft dichtend gehalten ist.

11. Sicherheitseinrichtung nach einem der Ansprüche 1 bis 10, **dadurch gekennzeichnet,** daß ein Ventilschaft (8a) des Verschlußstückes (8) in einer Stopfbuchse (26) abgedichtet und gleitend geführt ist, daß sich auf der dem Druckbehälter (11) zugewandten Seite der Stopfbuchse (26) eine mit der Druckentlastungsleitung (10) kommunizierende und den Ventilsitz begrenzende Überströmkammer (9) befindet und daß auf der anderen Seite der Stopfbuchse (26) die Ventilschließfeder (12) in einer Ventilkammer (28) aufgenommen ist.

12. Sicherheitseinrichtung nach Anspruch 11,
**dadurch gekennzeichnet**, daß der Ventilschaft (8a) von dem Kraftübertragungsglied (13) zentrisch- gleitend durchdrungen ist und in die Ventilkammer (28) ragt, daß sich der Ventilschaft (8a) auf der dem Verschlußstück (8) abgewandten Seite der Stopfbuchse (26) zu einer die Ventilkammer (28) begrenzenden druckfesten Kapsel erweitert oder mit einer solchen Kapsel (29) verbunden ist,
und daß in der Kapsel (29) sich die Ventilschließfeder (12) befindet und mit einem Ende auf dem Kapselboden (29.1) abstützt sowie am anderen Ende gegen das vom freien Ende (13.1) des Kraftübertragungsgliedes (13) gebildete oder getragene Widerlager (14) abstützt.

13. Sicherheitseinrichtung nach einem der Ansprüche 1 bis 12, **dadurch gekennzeichnet**, daß bei entsprechend geringeren Querschnitts-Abmessungen des Druckentlastungsventils (4) und des Deckelstutzens (2) die Druckentlastungsleitung (10) als Steuerleitung für ein gesondertes Abblaseventil ausgebildet ist.

14. Sicherheitseinrichtung nach Anspruch 8 oder 9,
**dadurch gekennzeichnet**, daß die lösbare Kupplung eine Gewindekupplung (39) ist.

## Claims

1. Safety device protecting a nuclear reactor pressure vessel against overpressure failure in the event of inadequate cooling of the core, wherein there is pressure-tightly inserted into a wall (1) of the pressure vessel (11), or into a line (2) passing through said wall (1), a pressure relief valve (4) which by means of a closure element (8) normally blocks the flow from the interior of the pressure vessel (11) to a pressure relief line (10) and which is held by a valve closing spring (12) supported against an abutment (14), characterized in that the abutment (14) is in turn held by a force transmission element (13), and in that said force transmission element (13) is fastened at its end remote from the abutment (14) by means of a detent (16; 35) which is arranged in the pressure vessel (11) and is releasable in dependence on a threshold temperature and which is releasable, for the purpose of freeing the abutment (14) and thus lifting the closure element (8) off its seat as the result of differential pressure, at a threshold temperature of for example 700° C.

2. Safety device according to Claim 1, characterized in that the force transmission element (13) extends from its force application point on the abutment (14) into the interior of the pressure vessel (11) as far as a built-in element (15), where it is fastened by means of the temperature-dependent detent (16; 35).

3. Safety device according to Claim 1 or 2, characterized in that the force transmission element (13) is in the form of a tension element which at its one end (13.1) is coupled to the closure element (8) by means of the abutment (14) of the valve closing spring (12), and at its other end (13.2) is fastened by means of the temperature-dependent detent (16; 35) which, when the threshold temperature is reached, permits axial deflection of the tension element (13).

4. Safety device according to one of Claims 1 to 3, characterized in that the force transmission element (13) is fastened by means of a fusible solder detent (16) which melts when the threshold temperature is reached.

5. Safety device according to Claim 3, characterized in that the tension element (13) is joined tensionally fast at its other end to a metal bar (35) fastened to and in thermal contact with built-in elements of the pressure vessel, and is secured by means of this metal bar, the coefficient of linear expansion of the metal bar (35) being higher, preferably substantially higher, than that of the tension element (13), and the metal bar and, with it, the tension element (13) undergoing, when the threshold temperature is reached, an elongation such that the closure element (8) opens.

6. Safety device according to one of Claims 1 to 5, characterized in that the pressure relief valve (4) is flanged on a connection neck (2) on the lid of the pressure vessel (11).

7. Safety device according to one of Claims 3 to 6, characterized in that the tension element (13) is in the form of a draw rod.

8. Safety device according to one of Claims 1 to 7, characterized in that the force transmission element (13) is provided, inside the pressure vessel (11), with a releasable coupling (19, 21; 39) permitting the uncoupling and withdrawal of at least a part of the force transmission element (13) before the dismantling of the pressure vessel lid (1).

9. Safety device according to Claim 8, characterized in that the force transmission element (13), together with its temperature-dependent detent, is capable of being fastened to an upper grid plate (15) of the pressure vessel (11) and, by means of a releasable coupling or locking means, for example a bayonet fastening (19a, 22, 23), of being released and dismantled from above, at least as regards an outer or upper part, when the pressure relief valve (4) is open.

10. Safety device according to one of Claims 1 to 9, characterized in that the closure element (8) of the pressure relief valve (4) is a valve cone which tapers towards the flow arrival direction and which is held sealingly by the force transmission element (13) against correspondingly conical seat surfaces (17) and against the action of the force resulting from the differential pressure.

11. Safety device according to one of Claims 1 to 10, characterized in that a valve stem (8a) of the closure element (8) is sealingly and slidingly guided in a stuffing box (26), in that an overflow chamber (9) communicating with the pressure relief line (10) and delimiting the valve seat is situated on that side of the stuffing box (26) which faces the pressure vessel (11), and in that the valve closing spring (12) is housed in a valve chamber (28) on the other side of the stuffing box (26).

12. Safety device according to Claim 11, characterized in that the force transmission element (13) extends, sliding centrally, through the valve stem (8a), which projects into the valve chamber (28), in that on the side of the stuffing box (26) remote from the closure element (8) the valve stem (8a) widens into a pressure-tight capsule delimiting the valve chamber (28), or is joined to such a capsule (29), and in that the valve closing spring (12) is contained in the capsule (29) and is supported at one end on the bottom of the capsule (29.1), while at the other end it is supported against the abutment (14) formed or carried by the free end (13.1) of the force transmission element (13).

13. Safety device according to one of Claims 1 to 12, characterized in that, given correspondingly smaller cross-sectional dimensions of the pressure relief valve (4) and of the connection neck (2) on the lid, the pressure relief line (10) is in the form of a control line for a separate blow-off valve.

14. Safety device according to Claim 8 or 9, characterized in that the releasable coupling is a screw thread coupling (39).

## Revendications

1. Dispositif de sécurité contre une défaillance due à une surpression d'une enceinte sous pression d'un réacteur nucléaire en cas de refroidissement insuffisant du coeur, une soupape (4) de détente de pression, qui bloque en situation normale le débit de l'espace intérieur de l'enceinte (11) sous pression vers une conduite (10) de détente de pression par une pièce d'obturation (8), et qui, ce faisant, est maintenue par un ressort de fermeture (12) de la soupape qui s'applique à une butée (14), étant montée de façon étanche à la pression dans une paroi (1) de l'enceinte (11) sous pression ou dans une conduite (2) traversant cette paroi (1),
caractérisé par le fait que,
la butée (14) est maintenue de son côté par un élément (13) de transmission de force, et cet élément (13) de transmission de force est immobilisé par son extrémité éloignée de la butée (14) au moyen d'un dispositif d'arrêt (16 ; 35), qui peut être déplacé en fonction de la température limite, qui est disposé dans l'enceinte (11) sous pression et qui, à une température limite de 700° C par exemple, peut se dissocier de son siège afin de libérer la butée (14) et de décoller par conséquent la pièce d'obturation (8) par la pression différentielle.

2. Dispositif de sécurité selon la revendication 1,
caractérisé par le fait que l'élément (13) de transmission de force s'étend de son point d'application de force à la butée (14) à une pièce (15) montée à l'intérieur de l'enceinte (11) sous pression, où il est fixé au moyen du dispositif d'arrêt (16 ; 35) dépendant de la température.

3. Dispositif de sécurité selon l'une des revendications 1 ou 2,
caractérisé par le fait que l'élément (13) de transmission de force est sous la forme d'un élément de traction, qui est accouplé par l'une de ses extrémités (13.1) à la pièce d'obturation (8) par l'intermédiaire de la butée (14) du ressort de fermeture (12) de la soupape, et qui par son autre extrémité (13.2) est immobilisé au moyen du dispositif d'arrêt (16 ; 35), qui dépend de la température et qui permet une déviation axiale de l'élément (13) de traction lorsque la température limite est atteinte.

4. Dispositif de sécurité selon l'une des revendications 1 à 3,
caractérisé par le fait que l'élément (13) de transmission de force est immobilisé au moyen d'un dispositif d'arrêt (16) à brasure fusible, qui fond lorsque la température limite est atteinte.

5. Dispositif de sécurité selon la revendication 3,
caractérisé par le fait que l'élément (13) de traction est relié solidairement en traction par son autre extrémité à une barre métallique (35) qui est en contact thermique avec des pièces montées dans l'enceinte sous pression et qui est fixée à ces dernières, et il est bloqué au moyen de cette barre métallique, le coefficient de dilatation linéaire de la barre métallique (35) étant supérieur, de préférence nettement supérieur, à celui de l'élément (13) de traction, et, lorsque la température limite est atteinte, la barre métallique et avec elle l'élément (13) de traction subissent un tel allongement que l'élément d'obturation (8) s'ouvre.

6. Dispositif de sécurité selon l'une des revendications 1 à 5, caractérisé par le fait que la soupape (4) de détente de pression est fixée à une tubulure (2) du couvercle de l'enceinte (11) sous pression.

7. Dispositif de sécurité selon l'une des revendications 3 à 6, caractérisé par le fait que l'élément (13) de traction est sous la forme d'une barre de traction.

8. Dispositif de sécurité selon l'une des revendications 1 à 7, caractérisé par le fait que l'élément (13) de transmission de force est muni à l'intérieur de l'enceinte (11) sous pression d'un accouplement (19, 21 ; 39) amovible, qui permet le découplage et le retrait d'au moins une partie de l'élément (13) de transmission de force avant le démontage du couvercle (1) de l'enceinte sous pression.

9. Dispositif de sécurité selon la revendication 8,
caractérisé par le fait que l'élément (13) de transmission de force peut être immobilisé par son dispositif d'arrêt dépendant de la température sur une plaque de grille supérieure (15) de l'enceinte (11) sous pression, et, lorsque la soupape (4) de détente de pression est ouverte, il peut être déplacé et démonté à partir du haut, au moins par une partie extérieure ou supérieure, au moyen d'un accouplement ou d'un verrouillage amovible, par exemple au moyen d'un verrouillage à baïonnette (19a, 22, 23).

10. Dispositif de sécurité selon l'une des revendications 1 à 9, caractérisé par le fait que la pièce d'obturation (8) de la soupape (4) de détente de pression est un cone de soupape se rétrécissant en direction de l'arrivée du flux, qui est maintenu par l'élément (13) de transmission de force de façon étanche contre des surfaces d'appui (17) de forme conique correspondante et contre la force résultant de la pression différentielle.

11. Dispositif de sécurité selon l'une des revendications 1 à 10, caractérisé par le fait qu'une tige (8a) de soupape de la pièce d'obturation (8) est rendue étanche par un presse-étoupe (26) dans lequel elle est guidée de façon coulissante, une chambre de décompression (9) communiquant avec la conduite (10) de détente de pression et délimitant le siège de la soupape se trouve du côté du presse-étoupe (26) tourné vers l'enceinte (11) sous pression, et, de l'autre côté du presse-étoupe (26), le ressort de fermeture (12) de la soupape est logé dans une chambre (28) de soupape.

12. Dispositif de sécurité selon la revendication 11,
caractérisé par le fait que la tige (8a) de soupape est traversée centralement de façon coulissante par l'élément (13) de transmission de force et pénètre dans la chambre (28) de soupape, la tige (8a) de soupape s'évase du côté du presse-étoupe (26), éloigné de la pièce d'obturation (8) en une capsule résistant à la pression et délimitant la chambre (28) de soupape, ou est reliée à une capsule (29) de ce genre,
le ressort (12) de fermeture de la soupape se trouve dans la capsule (29) et s'applique par une extrémité au fond (29.1) de la capsule et par l'autre extrémité à la butée (14) qui est formée ou supportée par l'extrémité libre (13.1) de l'élément (13) de transmission de force.

13. Dispositif de sécurité selon l'une des revendications 1 à 12, caractérisé par le fait que, lorsque les dimensions des sections transversales de la soupape (4) de détente de pression et de la tubulure (2) du couvercle sont assez petites, la conduite (10) de détente de pression est conçue en tant que conduite de commande pour une soupape de purge spécifique.

14. Dispositif de sécurité selon l'une des revendications 8 ou 9,
caractérisé par le fait que l'accouplement amovible est un accouplement fileté (39).
